# EUROPÄISCHE PATENTSCHRIFT

(11) **EP 3 662 572 B1**
(45) Veröffentlichungstag und Bekanntmachung des Hinweises auf die Patenterteilung: **17.06.2026**
(21) Anmeldenummer: 17783782.0
(22) Anmeldetag: 28.09.2017
(51) Int. Cl.: H02M 7/483, H02M 1/00

(54) **SUBMODUL FÜR EINEN MODULAREN MEHRSTUFENUMRICHTER**
SUBMODULE FOR A MODULAR MULTILEVEL CONVERTER
SOUS-MODULE CONÇU POUR UN CONVERTISSEUR MODULAIRE MULTINIVEAUX

(43) Veröffentlichungstag der Anmeldung: 10.06.2020
(60) Teilanmeldung: 26175185.3
(73) Patentinhaber: Siemens Energy Global GmbH & Co. KG, 81739 München (DE)
(72) Erfinder: ALVAREZ VALENZUELA, Rodrigo Alonso, 90408 Nürnberg (DE); ZENKNER, Andreas, 90587 Veitsbronn (DE); MONDAL, Gopal, 91058 Erlangen (DE); HERGT, Martin, 90411 Nürnberg (DE); NIELEBOCK, Sebastian, 91301 Forchheim (DE)
(86) Internationale Anmeldenummer: PCT/EP2017/074589
(87) Internationale Veröffentlichungsnummer: WO 2019/063078

(56) Entgegenhaltungen:
- EP-A1- 3 041 127
- WO-A1-2007/087732
- WO-A2-2013/126660
- CA-A1- 2 878 767
- CH-A2- 706 337
- CN-A- 104 242 641
- CN-B- 104 410 260
- US-A1- 2015 124 506
- ADAM GRAIN PHILIP ET AL: "New Efficient Submodule for a Modular Multilevel Converter in Multiterminal HVDC Networks", IEEE TRANSACTIONS ON POWER ELECTRONICS, INSTITUTE OF ELECTRICAL AND ELECTRONICS ENGINEERS, USA, vol. 32, no. 6, 1 June 2017 (2017-06-01), pages 4258 - 4278, XP011640902, ISSN: 0885-8993, [retrieved on 20170210], DOI: 10.1109/TPEL.2016.2603180
- WU YU ET AL: "Analysis and discussion of false triggering ofdesaturation protection circuit in a T-type neutral point clamped inverter and its solutions", IET POWER ELECTRONICS, IET, UK, vol. 7, no. 9, 1 September 2014 (2014-09-01), pages 2242 - 2249, XP006049578, ISSN: 1755-4535, DOI: 10.1049/IET-PEL.2013.0442
- YUAN XIBO: "Derivation of multilevel voltage source converter topologies", IECON 2016 - 42ND ANNUAL CONFERENCE OF THE IEEE INDUSTRIAL ELECTRONICS SOCIETY, IEEE, 23 October 2016 (2016-10-23), pages 3323 - 3330, XP033034222, [retrieved on 20161221], DOI: 10.1109/IECON.2016.7794020

## Beschreibung

Die Erfindung betrifft einen modularen Mehrstufenumrichter.

Ein modularer Mehrstufenumrichter, auch modularer Multilevel Umrichter oder kurz MMC bzw. M2C (nach dem englischen "modular multilevel converter") genannt, ist ein Umrichter zum Umwandeln einer Spannung in eine andere Spannung. Ein modularer Mehrstufenumrichter kann z.B. eine Gleichspannung in eine Wechselspannung umwandeln, d.h. er wird als Wechselrichter verwendet. Ein modularer Mehrstufenumrichter kann außerdem z.B. eine Wechselspannung in eine Gleichspannung umwandeln, d.h. er wird als Gleichrichter verwendet. Weiterhin kann ein modularer Mehrstufenumrichter eine Wechselspannung in eine in der Frequenz und Amplitude unterschiedliche Wechselspannung umwandeln, ohne zunächst eine Gleichspannung zu erzeugen, d.h. er wird als direkter Umrichter verwendet.

Modulare Mehrstufenumrichter können beispielsweise als Wechselrichter in einem Photovoltaik-Kraftwerk, als Transformator in einem Hochspannungs-Gleichstrom-Übertragungssystem (HGÜ) oder einem Bahnstrom-System verwendet werden.

Ein modularer Mehrstufenumrichter als Gleichrichter wird beispielsweise in der Hochspannungs-Gleichstrom-Übertragung benötigt. Dabei wird aus einer Wechselspannung eine Gleichspannung erzeugt, welche zum verlustarmen Transport über weite Übertragungsstrecken hinweg genutzt wird. Nach der Übertragung wird die Gleichspannung wiederum mit einem modularen Mehrstufenumrichter als Wechselrichter in eine Wechselspannung umgewandelt, um diese in das Wechselstromnetz einzuspeisen.

In seinem Aufbau umfasst ein modularer Mehrstufenumrichter zumindest eine Reihenschaltung mit mehreren in Reihe geschalteten Submodulen. EP 2677653 A1 offenbart einen modularen Mehrstufenumrichter, welcher in diesem Fall drei Reihenschaltungen mit 2N Modulen umfasst. Jede der Reihenschaltungen wird durch eine Wechselspannungsleitung in zwei Zweige geteilt. Jeder Zweig wiederum ist über ein Drosselelement mit der Wechselspannungsleitung verbunden. Ferner weist jedes Modul einen Energiespeicher und eine Schaltvorrichtung auf. Der jeweilige Energiespeicher ist dazu eingerichtet, eine elektrische Energie zu speichern. In jedem Modul kann der Energiespeicher zumindest teilweise mit elektrischer Energie (auf-) geladen werden. Mithilfe der Schaltvorrichtung kann gesteuert werden, ob der Energiespeicher des jeweiligen Moduls geladen bzw. entladen werden soll oder ob der Energiespeicher überbrückt werden soll.

Aus der Offenlegungsschrift US 2015/0124506 Al ist ein Submodul mit zwei Kondensatoren bekannt, das als Ausgangsspannung die Spannung Null, die Spannung eines Kondensators oder die Summe der Spannungen der beiden Kondensatoren ausgeben kann.

Die internationale Patentanmeldung WO 2013/126660 A2 offenbart ein Submodul mit zwei Kondensatoren, wobei dieses Submodul als Ausgangsspannung die Spannung des einen Kondensators oder die Spannung des anderen Kondensators ausgeben kann.

Aus der CN104410260B ist eine MMC-Teilmodulstruktur mit zwei Kondensatoren, vier Hauptschaltern und ein oder zwei bidirektionalen Leistungsschaltern bekannt, die durch gezielte Schaltzustände sowohl eine dreistufige Spannungsmodulation im Normalbetrieb als auch die Erzeugung einer Gegen-EMK zur Isolation von Gleichstromfehlern im Sperrbetrieb ermöglicht. Das zugehörige Modulationsverfahren umfasst eine spannungs- und stromabhängige Auswahl der einzuschaltenden Kondensatoren sowie redundante Schaltzustände zur Aufrechterhaltung des Betriebs bei Ausfall einzelner Schalter.

Aufgabe der vorliegenden Erfindung ist es, einen verbesserten modularen Mehrstufenumrichter bereitzustellen.

Diese Aufgabe wird durch einen modularen Mehrstufenumrichter mit den Merkmalen von Anspruch 1 gelöst.

Der erfindungsgemäße modulare Mehrstufenumrichter weist eine Mehrzahl von Submodulen auf, von denen zumindest ein Teil aufweist: eine erste Serienschaltung mit zwei in Serie geschalteten Energiespeichern, deren Verbindungspunkt einen zweiten Modulanschluss bildet und eine zweite Serienschaltung mit einer ersten und zweiten in Serie zueinander geschalteten Schalteinrichtung, deren Verbindungspunkt einen ersten Modulanschluss bildet. Dabei sind die erste und zweite Serienschaltung parallel geschaltet. Schließlich ist zwischen dem ersten und zweiten Modulanschluss eine bidirektionale Schalteinrichtung angeordnet.

Bei den Energiespeichern handelt es sich jeweils um einen einzelnen Kondensator oder mehrere Kondensatoren, die zusammen einen Energiespeicher bilden.

Die Submodule für den erfindungsgemäßen modularen Mehrstufenumrichter umfassen jeweils einen ersten und zweiten Modulanschluss zur Einbindung des Submoduls in den modularen Mehrstufenumrichter. Es handelt sich bei dem Submodul also um ein zweipoliges Submodul. Die Modulanschlüsse dienen dem Anschluss des Submoduls, beispielsweise an weitere Submodule. Das Submodul wird mittels der Modulanschlüsse in Reihe mit weiteren Submodulen geschaltet.

Der modulare Mehrstufenumrichter (M) weist eine Steuereinrichtung auf, die ausgestaltet ist, für eines oder mehrere der Submodule (SM) durch Schaltung der Schalteinrichtungen (S1, S2, S3) den Ladezustand der Energiespeicher (C1, C2) auf einem ersten Pegel für einen ersten der Energiespeicher (C1) und auf einem zweiten Pegel für einen zweiten der Energiespeicher (C2) zu halten, wobei der erste Pegel im Bereich zwischen 30 und 70%, insbesondere in einem Bereich zwischen 40% und 60% des zweiten Pegels liegt, und wobei die zweite Schalteinrichtung (S2) in Serie zum zweiten der Energiespeicher (C2) geschaltet ist.

Vorteilhaft erlauben die Submodule des erfindungsgemäßen modularen Mehrstufenumrichters eine Zuschaltung eines der beiden Energiespeicher in beiden Polaritäten analog zu einem Vollbrücken-Submodul. Im Gegensatz zum Vollbrücken-Submodul befindet sich in dem Schaltzustand, bei dem das Submodul den Energiespeicher überbrückt, nur die bidirektionale Schalteinrichtung im Strompfad, wodurch vorteilhaft die Leitungsverluste reduziert werden.

Vorteilhafte Ausgestaltungen des erfindungsgemäßen modularen Mehrstufenumrichters gehen aus den von Anspruch 1 abhängigen Ansprüchen hervor. Dabei kann die Ausführungsform nach Anspruch 1 mit den Merkmalen eines der Unteransprüche oder vorzugsweise auch mit denen aus mehreren Unteransprüchen kombiniert werden. Demgemäß können für das Submodul des modularen Mehrstufenumrichters noch zusätzlich folgende Merkmale vorgesehen werden:
- Die bidirektionale Schalteinrichtung kann so gestaltet sein, dass bei seinem Ausfall eine niederohmige Verbindung geschaffen wird. Mit anderen Worten hat die bidirektionale Schalteinrichtung "conduct-on-fail"-Eigenschaften. Dadurch wird bei einem Ausfall der bidirektionalen Schalteinrichtung das Submodul sicher und dauerhaft überbrückt, sodass ein Umrichter mit einem solchen Submodul den Betrieb fortsetzen kann. Hierzu ist vorteilhaft keine zusätzliche Schaltung mit einem Überbrückungsschalter und einer Überwachungseinrichtung nötig. Es werden also Bauteile, Kosten und Komplexität reduziert.
- Die bidirektionale Schalteinrichtung kann eine Serie aus zwei gegensinnig angeordneten Leistungshalbleiterschaltern umfassen, beispielsweise eine Serie aus zwei gegensinning angeordneten IGBTs oder MOSFETs mit paralleler Diode. Alternativ kann die bidirektionale Schalteinrichtung eine Parallelschaltung zweier gegensinnig angeordneter Leistungshalbleiterschalter umfassen, beispielsweise zweier IGBTs ohne parallele Freilaufdiode. In beiden Fällen ist die Überbrückung der Energiespeicher stromrichtungsunabhängig abschaltbar, wodurch das Submodul vorteilhaft einen Schutz des Wandlers bei einem DC-seitigen Kurzschluss erlaubt.
- Die erste Schalteinrichtung umfasst einen ersten Leistungshalbleiter. Insbesondere umfasst die erste Schalteinrichtung genau den ersten Leistungshalbleiter, also mit anderen Worten nur einen Leistungshalbleiter.
- Die erste Schalteinrichtung kann eine erste Diode in Serie zum ersten Leistungshalbleiter umfassen. Hierdurch werden Aufbau und Ansteuerung vereinfacht.
- Die Aufbauvarianten für die erste Schalteinrichtung können unabhängig von der ersten Schalteinrichtung auch bei der zweiten Schalteinrichtung verwendet werden. So kann die zweite Schalteinrichtung einen einzelnen dritten Leistungshalbleiter umfassen. Mit anderen Worten kann also die zweite Schalteinrichtung genau einen Leistungshalbleiter umfassen. Weiterhin kann die zweite Schalteinrichtung zusätzlich einen vierten Leistungshalbleiter in Serie zum dritten Leistungshalbleiter umfassen. Alternativ kann die zweite Schalteinrichtung anstelle des vierten Leistungshalbleiters eine zweite Diode in Serie zum dritten Leistungshalbleiter aufweisen.
- Die erste Schalteinrichtung umfasst genau den ersten Leistungshalbleiter, also mit anderen Worten nur einen Leistungshalbleiter, während die zweite Schalteinrichtung die bereits beschriebene Serienschaltung aus dem dritten und vierten Leistungshalbleiter aufweist. Hierdurch wird eine stärkere Aufladung des zweiten der Energiespeichers ermöglicht, wobei der zweite Energiespeicher derjenige ist, der in Serie zur zweiten Schalteinrichtung angeordnet ist. Ebenso ist es möglich, dass die zweite Schalteinrichtung genau den dritten Leistungshalbleiter, also mit anderen Worten nur einen Leistungshalbleiter aufweist, während die erste Schalteinrichtung die bereits beschriebene Serienschaltung aus dem ersten und zweiten Leistungshalbleiter aufweist.

Das Submodul ist besonders geeignet, um einen modularen Mehrstufenumrichter aufzubauen. Dazu werden mehrere Submodule in Serie geschaltet, um wenigstens zwei Zweige auszubilden. Die Zweige werden paarweise zusammengeschaltet. Bei den Submodulen handelt es sich teilweise oder komplett um erfindungsgemäße Submodule. Es ist möglich, dass alle Submodule gleich aufgebaut sind. Alternativ ist es auch möglich, dass die Submodule verschieden voneinander aufgebaut sind, auch wenn es sich nur um erfindungsgemäße Submodule handelt.

Um die in Anspruch 1 für die beiden Energiespeicher definierten Pegel zu erreichen, ist es zweckmäßig, wenn die in Serie zum zweiten der Energiespeicher liegende Schalteinrichtung diejenige mit zwei in Serie geschalteten Leistungshalbleitern ist. Mit anderen Worten umfasst beispielsweise die zweite Schalteinrichtung zwei serielle Leistungshalbleiter und der zweite Energiespeicher wird mit etwa der doppelten Spannung geladen wie der erste Energiespeicher. Die erste Schalteinrichtung umfasst in diesem Beispiel nur genau einen Leistungshalbleiter.

In dieser Ausführung wird vorteilhaft der erste Energiespeicher mit einer positiven Spannung geladen und der zweite Energiespeicher mit einer negativen Spannung. Die positive Spannung. Die positive Spannung des ersten Energiespeichers ist höher als die negative Spannung des zweiten Energiespeichers.

Vorteilhaft kann bei dieser Betriebsform und diesem Aufbau derjenige Energiespeicher mit der höheren, also der positiven Spannung und der dazugehörige einzelne Leistungshalbleiter für den normalen Betrieb genutzt werden, während in außergewöhnlichen Betriebssituationen der Energiespeicher mit der geringeren, also der negativen Spannung zugeschaltet wird. Dadurch werden im normalen Betrieb die Durchlassverluste im Rahmen der Verluste eines Halbbrücken-Submoduls gehalten, während aber die Schaltmöglichkeiten eines Vollbrücken-Submoduls vorhanden sind für beispielsweise den Fall eines Kurzschlusses.

Weitere Vorteile und Merkmale sind der folgenden Beschreibung von Ausführungsbeispielen anhand der Figuren zu entnehmen. In den Figuren bezeichnen gleiche Bezugszeichen gleiche Bauteile und Funktionen. Dabei zeigen:
Figur 1 einen modularen Mehrstufenumrichter mit einer Reihenschaltung von mehreren Submodulen,
Figur 2 ein Submodul,
Figuren 3 und 4 Schalteinrichtungen des Submoduls,
Figuren 5 bis 10 Betriebszustände des Submoduls und
Figur 11 ein weiteres Submodul.

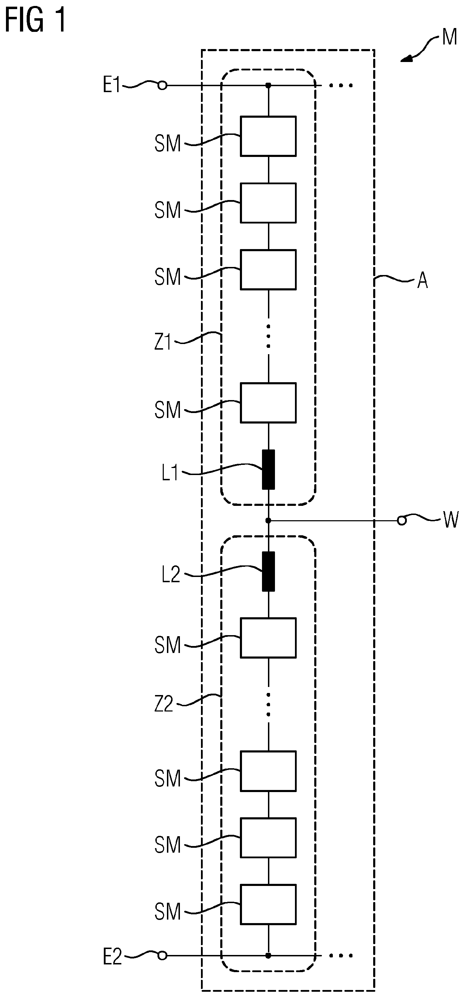

Figur 1 zeigt ein schematisches Schaltbild eines modularen Mehrstufenumrichters M mit mehreren Submodulen SM. Der modulare Mehrstufenumrichter M umfasst zwei Gleichspannungsanschlüsse E1, E2 für den Anschluss einer Gleichspannung bzw. für den Anschluss an ein Gleichstromnetz und einen Wechselspannungsanschluss W für den Anschluss an ein Wechselstromnetz. Weiter ist der modulare Mehrstufenumrichter M beispielsweise dazu eingerichtet, eine Gleichspannung in eine (einphasige) Wechselspannung umzuwandeln. Der Wechselspannungsanschluss W teilt die Reihenschaltung der Submodule SM in zwei Zweige Z1, Z2. Jeder Zweig Z1, Z2 umfasst die gleiche Anzahl an Submodulen SM sowie eine Induktivität L1, L2.

In Figur 1 ist nur ein Paar von Zweigen Z1, Z2 gezeigt, also ein Aufbau für eine einphasige Wechselspannung am Wechselspannungsanschluss W. Für einen dreiphasigen Aufbau würden drei Paare von Zweigen Z1, Z2 parallel zueinander geschaltet.

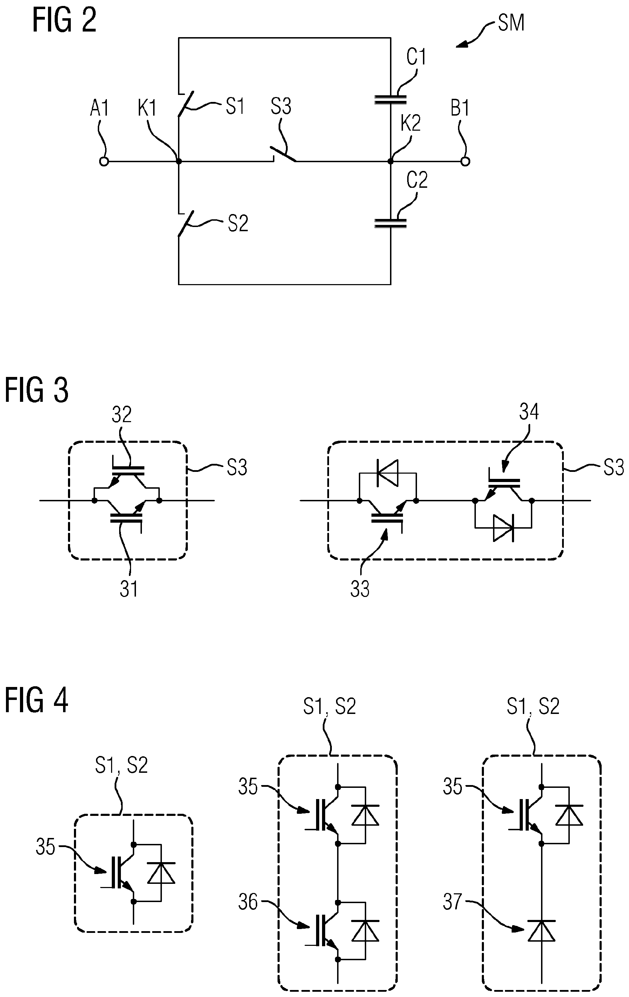

Figur 2 zeigt den prinzipiellen Aufbau eines Submoduls SM. Das Submodul SM umfasst eine erste Serienschaltung aus einer ersten Schalteinrichtung S1 und einer zweiten Schalteinrichtung S2. Weiterhin umfasst das Submodul SM eine zweite Serienschaltung eines ersten und eines zweiten Kondensators C1, C2. Die beiden Serienschaltungen sind parallel zueinander geschaltet, also mit ihren jeweiligen Außenanschlüssen verbunden. Der Mittelpunkt der ersten Serienschaltung bildet einen ersten Knotenpunkt K1. Der Mittelpunkt der zweiten Serienschaltung bildet einen zweiten Knotenpunkt K2. Den ersten und zweiten Knotenpunkt K1, K2 verbindend ist eine dritte Schalteinrichtung S3 angeordnet. Der erste Knotenpunkt K1 bildet einen ersten Submodul-Anschluss A1. Der zweite Knotenpunkt K2 bildet einen zweiten Submodul-Anschluss B1.

Im Betrieb des Submoduls SM wird immer eine der drei Schalteinrichtungen S1, S2, S3 angeschaltet, während die beiden anderen Schalteinrichtungen S1, S2, S3 abgeschaltet sind. Durch Anschalten der dritten Schalteinrichtung S3 und Abschaltung der ersten und zweiten Schalteinrichtungen S1, S2 wird das Submodul SM in einen "0"-Zustand geschaltet, bei dem die Kondensatoren C1, C2 überbrückt sind und somit vom Submodul SM keine Spannung erzeugt wird. Durch Anschalten der ersten Schalteinrichtung S1 und Abschaltung der zweiten und dritten Schalteinrichtungen S2, S3 wird das Submodul SM in einen "+"-Zustand geschaltet, bei dem der erste Kondensator C1 in den Strompfad geschaltet ist und somit seine Spannung der Zweigspannung zugefügt wird. Durch Anschalten der zweiten Schalteinrichtung S2 und Abschaltung der ersten und dritten Schalteinrichtungen S1, S3 wird das Submodul SM in einen "-"-Zustand geschaltet, bei dem der zweite Kondensator C2 in den Strompfad geschaltet ist und somit seine Spannung der Zweigspannung zugefügt wird.

Figur 3 zeigt Ausgestaltungen der dritten Schalteinrichtung S3. Wichtig ist dabei, dass die dritte Schalteinrichtung S3 "conduct-on-fail"-Eigenschaften aufweist, also im Falle eines Ausfalls der dritten Schalteinrichtung S3 eine niederohmige Verbindung an ihrer Stelle sichergestellt ist. Ein solcher Ausfall der dritten Schalteinrichtung S3 führt somit immer in den "0"-Zustand für das Submodul SM. Dadurch wird das Submodul SM im Fehlerfall überbrückt und der modulare Mehrstufenumrichter 10 kann weiterarbeiten. Diese Eigenschaft haben solche Schalter, die bei einem Überstrom legieren und dadurch eine niederohmige Verbindung sicherstellen.

Eine erste Variante für die dritte Schalteinrichtung S3 ist eine gegensinnige Parallelschaltung von zwei IGBTs 31, 32, wobei die IGBTs 31, 32 in diesem Fall ohne jeweilige zusätzliche Dioden verbaut werden. Bei dieser Ausführung ist in jeder Stromrichtung und bei jedem Schaltzustand höchstens ein IGBT im Strompfad. Dadurch werden vorteilhaft die Leitungsverluste im "0"-Zustand gegenüber einem Vollbrücken-Submodul verringert.

In einer zweiten Variante wird die dritte Schalteinrichtung S3 durch eine gegensinnige Serienschaltung von zwei IGBTs 33, 34 gebildet.

Figur 4 zeigt 3 zeigt Ausgestaltungen der erste und der zweiten Schalteinrichtung S1, S2. Die beiden Schalteinrichtungen S1, S2 können unabhängig voneinander als je eine der möglichen Ausgestaltungen realisiert sein, müssen also mit anderen Worten nicht gleichartig aufgebaut sein. Die Schalteinrichtungen S1, S2 können einen einzelnen Schalter 35, beispielsweise einen IGBT, umfassen. Alternativ können die Schalteinrichtungen S1, S2 als eine Serie aus zwei Schaltern 35, 36 aufgebaut sein. In einer weiteren Alternative umfassen die Schalteinrichtungen S1, S2 einen Schalter 35 in Serie zu einer Diode 37.

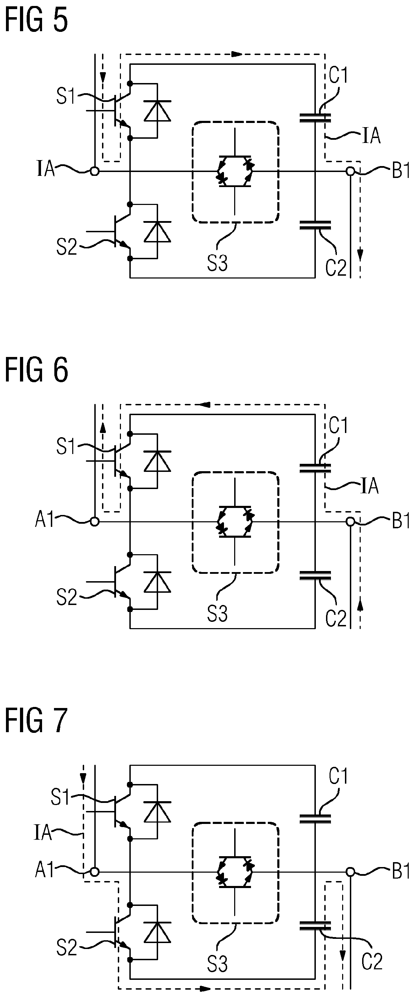

Die Figuren 5 bis 10 zeigen eine mögliche Betriebsform für das Submodul SM. Es wird dabei von einem symmetrischen Betrieb ausgegangen, bei dem eine gleich hohe Spannung an beiden Kondensatoren C1, C2 angestrebt wird und bei dem beide Kondensatoren C1, C2 verwendet werden. Im Submodul SM in den Figuren 5 bis 10 umfassen die erste und die zweite Schalteinrichtung S1, S2 jeweils genau einen IGBT 35 und die dritte Schalteinrichtung S3 wird von einer gegensinnigen Parallelschaltung von zwei IGBTs 31, 32 gebildet.

Figur 5 zeigt das Submodul SM in einem Schaltzustand, in dem eine positive Spannung in Höhe der Spannung VC des ersten Kondensators C1 zwischen den Submodul-Anschlüssen A1, B1 anliegt, wobei der Arm-Stromfluss IA in der Richtung vom ersten Modulanschluss A1 zum zweiten Modulanschluss B1 verläuft. In diesem Fall sind die zweite und dritte Schalteinrichtung S2, S3 und damit ihre jeweiligen Leistungshalbleiter abgeschaltet, während die erste Schalteinrichtung S1 eingeschaltet ist. Der Stromfluss IA führt in diesem Fall über die erste Schalteinrichtung S1 und den ersten Kondensator C1 und führt zu einer Ladung des ersten Kondensators C1.

Figur 6 zeigt das Submodul SM in einem Schaltzustand, in dem eine positive Spannung in Höhe der Spannung VC des ersten Kondensators C1 zwischen den Submodul-Anschlüssen A1, B1 anliegt, wobei der Arm-Stromfluss IA in der Richtung vom zweiten Modulanschluss B1 zum ersten Modulanschluss A1 verläuft. Auch in diesem Fall sind die zweite und dritte Schalteinrichtung S2, S3 und damit ihre jeweiligen Leistungshalbleiter abgeschaltet, während die erste Schalteinrichtung S1 eingeschaltet ist. Der Stromfluss IA führt in diesem Fall über die erste Schalteinrichtung S1 und den ersten Kondensator C1 und führt zu einer Entladung des ersten Kondensators C1.

Figur 7 zeigt das Submodul SM in einem Schaltzustand, in dem eine negative Spannung mit dem Betrag der Spannung VC des zweiten Kondensators C2 zwischen den Submodul-Anschlüssen A1, B1 anliegt, wobei der Arm-Stromfluss IA in der Richtung vom ersten Modulanschluss A1 zum zweiten Modulanschluss B1 verläuft. In diesem Fall sind die erste und dritte Schalteinrichtung S1, S3 und damit ihre jeweiligen Leistungshalbleiter abgeschaltet, während die zweite Schalteinrichtung S2 eingeschaltet ist. Der Stromfluss IA führt über die zweite Schalteinrichtung S2 und den zweiten Kondensator C2 und führt in diesem Fall zu einer Entladung des zweiten Kondensators C2.

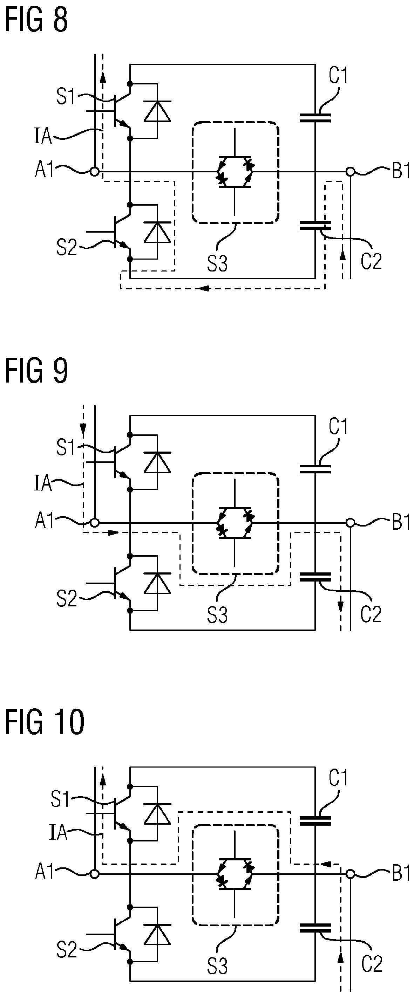

Figur 8 zeigt das Submodul SM in einem Schaltzustand, in dem eine negative Spannung mit dem Betrag der Spannung VC des zweiten Kondensators C2 zwischen den Submodul-Anschlüssen A1, B1 anliegt, wobei der Arm-Stromfluss IA in der Richtung vom zweiten Modulanschluss B1 zum ersten Modulanschluss A1 verläuft. Auch in diesem Fall sind die erste und dritte Schalteinrichtung S1, S3 und damit ihre jeweiligen Leistungshalbleiter abgeschaltet, während die zweite Schalteinrichtung S2 eingeschaltet ist. Der Stromfluss IA führt über die eingebaute Diode der zweiten Schalteinrichtung S2 und den zweiten Kondensator C2 und führt in diesem Fall zu einer Ladung des zweiten Kondensators C2.

Figur 9 zeigt das Submodul SM in einem Schaltzustand, in dem die Energiespeicher, also die Kondensatoren C1, C2 überbrückt sind, also im Wesentlichen keine Spannung zwischen den Submodul-Anschlüssen A1, B1 abfällt, wobei der Arm-Stromfluss IA in der Richtung vom ersten Modulanschluss A1 zum zweiten Modulanschluss B1 verläuft. In diesem Fall sind die erste und zweite Schalteinrichtung S1, S2 und damit ihre jeweiligen Leistungshalbleiter abgeschaltet, während die dritte Schalteinrichtung S3 eingeschaltet ist. Es ist dabei ausreichend, einen der beiden IGBTs 31, 32 einzuschalten. Der Stromfluss IA führt nur über den eingeschalteten der IGBTs 31, 32 der dritten Schalteinrichtung S3. Daher findet in diesem Schaltzustand keine Ladung oder Entladung der Kondensatoren C1, C2 statt.

Figur 10 zeigt das Submodul SM in einem Schaltzustand, in dem die Energiespeicher, also die Kondensatoren C1, C2 überbrückt sind, also im Wesentlichen keine Spannung zwischen den Submodul-Anschlüssen A1, B1 abfällt, wobei der Arm-Stromfluss IA in der Richtung vom zweiten Modulanschluss B1 zum ersten Modulanschluss A1 verläuft. Auch in diesem Fall sind die erste und dritte Schalteinrichtung S1, S3 und damit ihre jeweiligen Leistungshalbleiter abgeschaltet, während die zweite Schalteinrichtung S2 eingeschaltet ist. Es ist dabei ausreichend, im Gegensatz zu Figur 9 den anderen der beiden IGBTs 31, 32 einzuschalten. Der Stromfluss IA führt nur über den eingeschalteten der IGBTs 31, 32 der dritten Schalteinrichtung S3. Daher findet in diesem Schaltzustand keine Ladung oder Entladung der Kondensatoren C1, C2 statt.

Anhand der Figuren 5 bis 8 ist ersichtlich, dass aktives Laden und Entladen, also eine Spannungskontrolle für den ersten und für den zweiten Kondensator C1, C2 möglich ist, wenn die Stromrichtung in genügend geringen zeitlichen Abständen wechselt. Typischerweise wechselt die Stromrichtung mit jeder Halbwelle der Wechselspannung, die am Wechselspannungsanschluss W anliegt oder erzeugt wird.

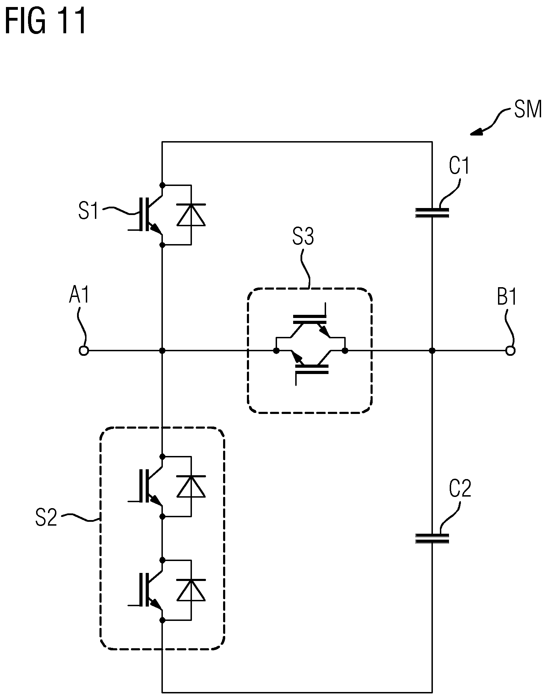

Eine weitere vorteilhafte Betriebsform für ein Submodul SM, das gemäß Fig. 11 aufgebaut ist, besteht darin, dass der zweite Kondensator C2 nur mit einer Spannung von 40 - 60 % der Spannung des ersten Kondensators C1 geladen wird. Weiterhin wird als zweite Schalteinrichtung S2 in diesem Submodul SM eine Serienschaltung zweier IGBTs eingesetzt.

Bei diesem Submodul SM werden im normalen Betrieb nur die erste und dritte Schalteinrichtung S1, S3 verwendet. Dadurch wird das Submodul SM im Wesentlichen wie ein bekanntes Halbbrücken-Submodul verwendet. Im Unterschied zum normalen Halbbrücken-Submodul kann jedoch im Fehlerfall durch die zweite Schalteinrichtung S2 eine Spannung negativer Polarität dargestellt werden. Das Submodul SM bzw. der damit aufgebaute Wandler agieren somit als DC-Breaker. Weiterhin ist durch die conduct-on-fail-Eigenschaft der dritten Schalteinrichtung S3 gewährleistet, dass eine Überbrückung des Submoduls SM im Falle des Ausfalls der dritten Schalteinrichtung S3 vorliegt.

Die zweite Schalteinrichtung S2 wird in diesem Submodul SM nur in Ausnahmefällen (DC-FRT, Sturm) eingesetzt. Sie erlaubt es, die Funktionalität eines Vollbrücken-Submoduls bereitzustellen, wenn das nötig ist, ohne aber die erhöhten Verluste eines Vollbrücken-Submoduls zwingend mitzubringen.

## Patentansprüche

1. Modularer Mehrstufenumrichter (M) mit einer Mehrzahl von Submodulen (SM), von denen wenigstens ein Teil aufweist:
- einen ersten und zweiten Modulanschluss (A1, B1) zur Einbindung des Submoduls (SM) in den modularen Mehrstufenumrichter (M),
- eine erste Serienschaltung mit zwei in Serie geschalteten Energiespeichern (C1, C2), deren Verbindungspunkt (K2) den zweiten Modulanschluss (B1) bildet,
- eine zweite Serienschaltung mit einer ersten und zweiten in Serie zueinander geschalteten Schalteinrichtung (S1, S2), deren Verbindungspunkt (K1) den ersten Modulanschluss (A1) bildet,
wobei
- die erste und zweite Serienschaltung parallel geschaltet sind und
- zwischen dem ersten und zweiten Modulanschluss (A1, B1) eine bidirektionale Schalteinrichtung (S3) angeordnet ist,
wobei die erste Schalteinrichtung (S1) nur einen ersten Leistungshalbleiter (35), insbesondere einen IGBT, umfasst,
wobei die zweite Schalteinrichtung (S2) einen dritten Leistungshalbleiter (35), insbesondere einen IGBT, und einen in Serie zum dritten Leistungshalbleiter (35) geschalteten vierten Leistungshalbleiter (36), insbesondere einen IGBT, umfasst, und
wobei der modulare Mehrstufenumrichter (M) eine Steuereinrichtung aufweist, die ausgestaltet ist, für eines oder mehrere der Submodule (SM) durch Schaltung der Schalteinrichtungen (S1, S2, S3) den Ladezustand der Energiespeicher (C1, C2) auf einem ersten Pegel für einen ersten der Energiespeicher (C1) und auf einem zweiten Pegel für einen zweiten der Energiespeicher (C2) zu halten, wobei der erste Pegel im Bereich zwischen 30 und 70%, insbesondere in einem Bereich zwischen 40% und 60% des zweiten Pegels liegt, und wobei die zweite Schalteinrichtung (S2) in Serie zum zweiten der Energiespeicher (C2) geschaltet ist.

2. Modularer Mehrstufenumrichter (M) nach Anspruch 1, bei dem die bidirektionale Schalteinrichtung (S3) so gestaltet ist, dass bei ihrem Ausfall eine niederohmige Verbindung geschaffen wird.

3. Modularer Mehrstufenumrichter (M) nach Anspruch 1, bei dem die bidirektionale Schalteinrichtung (S3) eine Serie aus zwei gegensinnig angeordneten Leistungshalbleitern (33, 34) umfasst.

4. Modularer Mehrstufenumrichter (M) nach Anspruch 1, bei dem die bidirektionale Schalteinrichtung (S3) eine Parallelschaltung zweier gegensinnig angeordneter Leistungshalbleiter (31, 32) umfasst.

5. Modularer Mehrstufenumrichter (M) nach einem der vorangehenden Ansprüche, bei dem die erste Schalteinrichtung (S1) eine Diode (37) in Serie zum ersten Leistungshalbleiter (35) umfasst.

6. Modularer Mehrstufenumrichter (M) nach einem der vorangehenden Ansprüche, bei dem die zweite Schalteinrichtung (S2) eine Diode (37) in Serie zum dritten Leistungshalbleiter (35) umfasst.

## Claims

1. A modular multilevel converter (M) with a plurality of submodules (SM), at least part of which has:
- first and second module terminals (A1, B1) for integrating the submodule (SM) into the modular multilevel converter (M),
- a first series circuit with two series-connected energy stores (C1, C2), the connection point (K2) of which forms the second module terminal (B1),
- a second series circuit with first and second switching devices (S1, S2) connected in series with one another, the connection point (K1) of which forms the first module terminal (A1),
wherein
- the first and second series circuits are connected in parallel, and
- a bidirectional switching device (S3) is arranged between the first and second module terminals (A1, B1),
wherein the first switching device (S1) comprises only a first power semiconductor (35), in particular an IGBT, wherein the second switching device (S2) comprises a third power semiconductor (35), in particular an IGBT, and a fourth power semiconductor (36), in particular an IGBT, connected in series with the third power semiconductor (35), and
wherein the modular multilevel converter (M) has a control device configured to maintain the charge state of the energy stores (C1, C2) for one or more of the submodules (SM) at a first degree for a first one of the energy stores (C1) and at a second degree for a second one of the energy stores (C2) by switching the switching devices (S1, S2, S3), wherein the first degree is in the range between 30% and 70%, in particular in a range between 40% and 60% of the second degree, and wherein the second switching device (S2) is connected in series with the second one of the energy stores (C2).

2. The modular multilevel converter (M) in accordance with claim 1, wherein the bidirectional switching device (S3) is configured such that a low-impedance connection is established in the event of its failure.

3. The modular multilevel converter in accordance with claim 1, wherein the bidirectional switching device (S3) comprises a series of two power semiconductors (33, 34) arranged in opposite directions.

4. The modular multilevel converter (M) in accordance with claim 1, wherein the bidirectional switching device (S3) comprises a parallel circuit of two power semiconductors (31, 32) arranged in opposite directions.

5. The modular multilevel converter (M) in accordance with any of the preceding claims, wherein the first switching device (S1) comprises a diode (37) in series with the first power semiconductor (35).

6. The modular multilevel converter (M) in accordance with any of the preceding claims, wherein the second switching device (S2) comprises a diode (37) in series with the third power semiconductor (35).

## Revendications

1. Convertisseur multiniveau modulaire (M) comprenant une pluralité de sous-modules (SM), dont au moins une partie présente :
- une première et une deuxième borne de module (A1, B1) pour l'intégration du sous-module (SM) dans le convertisseur multiniveau modulaire (M),
- un premier circuit série comprenant deux dispositifs de stockage d'énergie (C1, C2) montés en série, dont le point de connexion (K2) forme la deuxième borne de module (B1),
- un deuxième circuit série comprenant un premier et un deuxième dispositif de commutation (S1, S2) montés en série l'un avec l'autre, dont le point de connexion (K1) forme la première borne de module (A1),
dans lequel
- le premier et le deuxième circuit série étant montés en parallèle l'un avec l'autre, et
- un dispositif de commutation bidirectionnel (S3) est disposé entre la première et la deuxième borne de module (A1, B1),
dans lequel le premier dispositif de commutation (S1) comprend uniquement un premier semi-conducteur de puissance (35), en particulier un IGBT, le deuxième dispositif de commutation (S2) comprenant un troisième semi-conducteur de puissance (35), en particulier un IGBT, et un quatrième semi-conducteur de puissance (36), en particulier un IGBT, monté en série avec le troisième semi-conducteur de puissance (35), et
dans lequel le convertisseur multiniveau modulaire (M) présente un dispositif de commande qui est conçu pour maintenir, pour l'un ou plusieurs des sous-modules (SM) par commutation des dispositifs de commutation (S1, S2, S3), l'état de charge des dispositifs de stockage d'énergie (C1, C2) à un premier niveau pour un premier des dispositifs de stockage d'énergie (C1) et à un deuxième niveau pour un deuxième des dispositifs de stockage d'énergie (C2), le premier niveau se situant dans une plage comprise entre 30 et 70 %, en particulier dans une plage comprise entre 40 % et 60 %, du deuxième niveau, et dans lequel le deuxième dispositif de commutation (S2) est monté en série avec le deuxième des dispositifs de stockage d'énergie (C2).

2. Convertisseur multiniveau modulaire (M) selon la revendication 1, dans lequel le dispositif de commutation bidirectionnel (S3) est conçu de sorte qu'une liaison à basse impédance soit établie en cas de défaillance de celui-ci.

3. Convertisseur multiniveau modulaire (M) selon la revendication 1, dans lequel le dispositif de commutation bidirectionnel (S3) comprend une mise en série de deux semi-conducteurs de puissance (33, 34) disposés en opposition.

4. Convertisseur multiniveau modulaire (M) selon la revendication 1, dans lequel le dispositif de commutation bidirectionnel (S3) comprend un montage en parallèle de deux semi-conducteurs de puissance (31, 32) disposés en opposition.

5. Convertisseur multiniveau modulaire (M) selon l'une des revendications précédentes, dans lequel le premier dispositif de commutation (S1) comprend une diode (37) montée en série avec le premier semi-conducteur de puissance (35).

6. Convertisseur multiniveau modulaire (M) selon l'une des revendications précédentes, dans lequel le deuxième dispositif de commutation (S2) comprend une diode (37) montée en série avec le troisième semi-conducteur de puissance (35).
